# EUROPÄISCHE PATENTSCHRIFT

(11) **EP 3 649 010 B1**
(45) Veröffentlichungstag und Bekanntmachung des Hinweises auf die Patenterteilung: **19.05.2021**
(21) Anmeldenummer: 18731445.5
(22) Anmeldetag: 14.06.2018
(51) Int. Cl.: B60N 2/02, B60N 2/06, B60N 2/22, B60N 2/42, B60N 2/433

(54) **SITZVERSTELLUNGSEINRICHTUNG FÜR EINEN SITZ EINES KRAFTFAHRZEUGS UND KRAFTFAHRZEUG**
SEAT ADJUSTMENT SYSTEM FOR A SEAT OF A MOTOR VEHICLE, AND MOTOR VEHICLE
DISPOSITIF DE RÉGLAGE DE SIÈGE CONÇU POUR UN SIÈGE DE VÉHICULE AUTOMOBILE ET VÉHICULE AUTOMOBILE

(30) Priorität: 01.07.2017 DE 102017006241
(43) Veröffentlichungstag der Anmeldung: 13.05.2020
(73) Patentinhaber: Audi AG, 85045 Ingolstadt (DE)
(72) Erfinder: PFEFFER, Frank, 85110 Kipfenberg (DE)
(86) Internationale Anmeldenummer: PCT/EP2018/065815
(87) Internationale Veröffentlichungsnummer: WO 2019/007658

(56) Entgegenhaltungen:
- DE-A1- 3 933 562
- DE-A1-102011 050 151
- JP-B2- H0 615 313

## Beschreibung

Die Erfindung betrifft eine Sitzverstellungseinrichtung für ein Sitz eines Kraftfahrzeugs, aufweisend wenigstens einen die Verstellung treibenden Motor und wenigstens ein durch einen Bediener betätigbares Bedienelement für wenigstens eine Verstellfunktion, bei dessen Betätigung ein in einer Leitung von dem der Verstellfunktion zugeordneten Motor zu einer Stromversorgung vorgesehener Schalter geschlossen wird. Daneben betrifft die Erfindung ein Kraftfahrzeug.

Sitze in Kraftfahrzeugen sind für Fahrer und sonstige Insassen in eine Position zu bringen, in denen der Komfort und/oder die Sicherheit erhöht sind. Daher weisen derartige Sitze für Kraftfahrzeuge üblicherweise eine Mehrzahl von Verstellmöglichkeiten auf, beispielsweise betreffend die Längsposition des Sitzes bezogen auf die Fahrzeuglängsrichtung, die Höhe des Sitzes, die Schwenkstellung einer Sitzlehne und/oder die Verkippung der Sitzfläche. Während derartige Einstellungen in der Vergangenheit gänzlich von Hand, also mechanisch seitens einer auf dem Sitz befindlichen Person, vorgenommen wurden, bieten heutige Kraftfahrzeuge komfortablere Lösungen an, bei denen Motoren eingesetzt werden, um die verschiedenen Verstellfunktionen ohne Kraftaufwand des auf dem Sitz befindlichen Insassen bereitzustellen. Den Verstellfunktionen werden dann Bedienelemente zugeordnet, welche beispielsweise im Bereich einer Armlehne des entsprechenden Sitzes vorgesehen sein können oder dergleichen.

Zur konkreten Realisierung von solchen Sitzverstellungseinrichtungen existieren zwei grundlegende unterschiedliche Möglichkeiten. Eine Möglichkeit nutzt Bedienelemente, die unmittelbar durch entsprechende mechanische Kopplung mit einem Schalter lastschaltend wirken, so dass mithin eine Betätigung des Bedienelements zum unmittelbaren Durchschalten von Spannung/Strom zum Motor der Sitzverstellungseinrichtung führen. Nachdem üblicherweise auch Insassen ein gewisses Gewicht aufweisen, werden üblicherweise höhere Stromstärken, bis zu 30 A, benötigt, so dass es sich bei den entsprechenden Bauteilen um Leistungselektronik-Bauteile handelt.

Alternativ wurden jedoch auch Bedienelemente vorgeschlagen, die einen Steuerstrom liefern, so dass die Betätigung des Bedienelements, beispielsweise widerstandskodiert, an ein Sitzsteuergerät der Sitzverstellungseinrichtung übertragen werden können. Beispielsweise können die Bedienelemente an analog-digitale Eingänge eines Mikrochips angeschlossen werden und liefern dann Schaltströme im mA-Bereich.

Bezüglich der Bedienelemente für die Sitzverstellungseinrichtung existiert häufig das Problem, dass diese in Bereichen angebracht werden, in denen es bei einem Unfall des Kraftfahrzeugs, der zu Formveränderungen der Karosserie und/oder sonstiger Bestandteile des Kraftfahrzeugs führt, insbesondere also bei einer Kollision (Crash) mit einem Objekt, zu einer ungewollten Betätigung des Bedienelements kommen kann. Dies wiederum kann bei bestimmten Verstellfunktionen, beispielsweise der Längsverstellung und/oder der Verkippung der Lehne, zu ungewollten Effekten führen, beispielsweise dazu, dass ein Insasse des Sitzes in den Airbag und/oder einen anderen Bestandteil des Kraftfahrzeugs zusätzlich zu den Unfallfolgen gepresst wird.

Entsprechend wurde im Stand der Technik bereits vorgeschlagen, ein Sitzsteuergerät zu verwenden, welches Schaltsignale der Bedienelemente, die hier nicht unmittelbar lastschaltend wirken, und über ein Bussystem des Kraftfahrzeugs ein eine vorliegende Kollisionssituation anzeigendes Kollisionssignal einlesen und im Fall eines eine Kollision anzeigenden Kollisionssignals eine Ansteuerung der Motoren der Sitzverstellungseinrichtung unterdrücken. Diese Ausgestaltung hat jedoch den Nachteil, dass ein teures Sitzsteuergerät mit einer Intelligenz erforderlich ist, welches nur kostenaufwendig realisiert werden kann. Ferner kann es bei einer Nutzung des Bussystems des Kraftfahrzeugs zu ungewollten Verzögerungen kommen.

Andere vorgeschlagene Lösungen nutzen beispielsweise pyrotechnische Maßnahmen, um im Fall einer Kollision die Schalter nicht länger nutzbar zu gestalten und/oder eine Leitung von einer Stromversorgung zu einem die Verstellung antreibenden Motor zu unterbrechen. Diese Maßnahmen haben den massiven Nachteil, dass häufig gewünscht wird, für Rettungskräfte wieder eine Verstellung des Sitzes zu erlauben, um an den gegebenenfalls eingeklemmten Insassen zu gelangen. Ferner müsste nach jeder Kollision die Sitzverstellungseinrichtung komplett repariert werden.

Das Patent JP H06 15313 B2 offenbart zum Beispiel eine Sitzverstellungseinrichtung aus dem Stand der Technik.

Der Erfindung liegt daher die Aufgabe zugrunde, eine verlässliche, aufwandsarm zu realisierende und reversible Möglichkeit zum Vermeiden einer ungewollten Sitzverstellung während einer Kollision eines Kraftfahrzeugs anzugeben.

Zur Lösung dieser Aufgabe ist bei einer Sitzverstellungseinrichtung der eingangs genannten Art erfindungsgemäß vorgesehen, dass dem Schalter zu dem Motor hin in der Leitung nachgeschaltet ein Relais vorgesehen ist, welches im unbestromten Zustand geöffnet ist, und die Sitzverstellungseinrichtung eine Steuereinheit aufweist, die bei einer Bedienelementbetätigung ohne Vorliegen eines eine Kollision des Kraftfahrzeugs anzeigenden Kollisionssignals zum Schließen des Relais ausgebildet ist und bei einer Bedienelementbetätigung bei Vorliegen des Kollisionssignals wenigstens zeitweise das Relais geöffnet belässt.

Dabei ist es besonders bevorzugt, wenn das Bedienelement mechanisch mit den Last schaltenden Schaltern gekoppelt ist und ein Schließen der Schalter mittels einer Schließschaltung ein Schließsignal an die Steuereinheit bewirkt oder mittels der Schließschaltung durch die Steuereinheit detektierbar ist. So ist es im Rahmen der vorliegenden Erfindung problemlos möglich, auf ein Sitzsteuergerät zu verzichten und einen einfach ausgestaltbaren Mikrochip zu verwenden, der die Stellung der Last schaltenden Schalter, die unmittelbar durch das manuell betätigte Bedienelement mechanisch betätigt werden, sowie das Kollisionssignal als Eingangsdaten erhält und entsprechend entscheidet, ob das Relais zu schließen ist oder nicht. Als Relais wird ein im unbestromten Zustand geöffnetes Relais ("normally open") verwendet, so dass im Fall einer Kollision eine gezielte Ansteuerung des Relais zur Unterbrechung der Leitung vermieden wird, was im Fall eines "normally closed"-Relais erforderlich wäre.

Das Relais ist erfindungsgemäß den bevorzugt Last schaltenden Schaltern zum Motor hin nachgeordnet, was den Vorteil mit sich bringt, dass die Stellung der Schalter weiterhin problemlos über den Mikrochip überwacht werden kann, was insbesondere im Hinblick auf eine potentielle Rückschaltung für Rettungskräfte zweckmäßig sein kann. Nachdem das Relais ohnehin offengeschaltet ist, solange es nicht bestromt wird, ist auch die Funktionsfähigkeit und Sicherheit bei Unterspannung gewährleistet.

Würde in einer alternativen, nicht erfindungsgemäßen Ausgestaltung das Relais seitens der Stromversorgung den Last schaltenden, zu überwachenden Schaltern vorgeschaltet sein, wäre, um die Schalterstellung zu überwachen, ein periodisches Schließen des Relais erforderlich, um einen Stromfluss und somit eine Überwachung überhaupt herbeiführen zu können. Dadurch, dass erfindungsgemäß das Relais den Schaltern nachgeschaltet ist, lassen sich die Schalterstellungen der mittels der Bedienelemente mechanisch betätigten, Last schaltenden Schalter problemlos überwachen, ohne dass der Motor bei dieser Überwachung der Schalter zwangsläufig bestromt würde.

Wie bereits erwähnt, kann die Steuereinheit, insbesondere bei mittels der Bedienelemente unmittelbar mechanisch betätigten, lastschaltenden Schaltern, ein Mikrochip sein und somit auf besonders einfache Art und Weise ausgeführt werden. Es ist ferner bevorzugt, wenn das Kollisionssignal als ein PWM-Signal erhalten wird. Auf diese Weise können, insbesondere bei direkter Übermittlung, seitens des Bussystems des Kraftfahrzeugs auftretende Verzögerungen vermieden werden, wobei nochmals angemerkt sei, dass allein durch die Tatsache, dass kein Steuergerät benötigt wird, welches Schaltsignale von nicht unmittelbaren Einfluss auf die Schalter habenden Bedienelementen umsetzt, verzögerungsfrei betrieben werden kann. Ein solches PWM-Signal kann beispielsweise von einem Airbag-Steuergerät und/oder dem Steuergerät eines Sicherheitssystems, welches die Signale von Kollisionssensoren auswertet, geliefert werden.

In einer besonders vorteilhaften Ausgestaltung kann vorgesehen sein, dass die Steuereinheit zum Schließen des Relais bei einer Schalterbetätigung ab einer zweiten Schalterbetätigung nach dem Vorliegen des Kollisionssignals ausgebildet ist. Wie bereits erwähnt, ist es wünschenswert, Rettungspersonal nach einer Kollision zu erlauben, die Verstellfunktion wieder vollständig zu nutzen. Um dies zu ermöglichen, sieht die hier vorgeschlagene besonders vorteilhafte Ausgestaltung der Erfindung vor, nachdem ein Kollisionssignal vorliegt oder vorlag, zunächst die Schalterbetätigung gänzlich zu sperren, so dass die Verformung, beispielsweise von Karosserieteilen, während des Kollisionsvorgangs keine versehentliche Sitzverstellung bewirken kann. Auch Rettungspersonal wird sich, falls es nicht durch eine Verformung zu einer versehentlichen Betätigung des Bedienelements kam, nicht davon abschrecken lassen, das Bedienelement zweimal hintereinander zu betätigen, so dass eine einfach zu realisierende Wiederinbetriebnahme durch das Rettungspersonal problemlos erfolgen kann. Kam es durch die Kollision selbst zu einer versehentlichen Betätigung des Bedienelements, kann sogar unmittelbar nach der Kollision im Hilfseinsatz die während der Kollision blockierte Verstellfunktion wieder genutzt werden. In dieser Ausgestaltung nutzt die Erfindung vorteilhaft aus, dass eine Überwachung der Schalter aufgrund der Nachordnung des Relais auch ohne Bestromung der Motoren durch die Steuereinheit problemlos möglich ist, insbesondere ohne dass das Relais erst angesteuert werden müsste. Mithin kann über einen einfach realisierten Zähler innerhalb der Steuereinheit nach einer Deaktivierung durch ein Kollisionssignal bei der zweiten Betätigung des Bedienelements die Verstellfunktion wieder freigeschaltet werden. Damit ist eine deutlich vorteilhaftere Ausgestaltung als eine Deaktivierung für eine vorbestimmte Zeitspanne gegeben, da nicht vorausgesagt werden kann, ab wann die Situation, in der eine versehentliche Betätigung des Bedienelements durch Verformung stattfindet, beendet ist, so dass ein Insasse, der noch nicht aus dem Kraftfahrzeug befreit wurde, durch eine zu frühe Reaktivierung beeinträchtigt werden könnte.

Eine weitere besonders vorteilhafte Ausgestaltung der vorliegenden Erfindung sieht vor, dass die Steuereinheit zum Öffnen des Relais bei einem länger als eine vorbestimmte Zeitspanne betätigten Bedienelement und/oder geschlossenen Schalter ausgebildet ist. Die Schalterüberwachung, die unabhängig vom tatsächlichen Schaltzustand des Relais möglich ist, erlaubt es mithin zusätzlich, "hängende" Bedienelemente, beispielsweise Taster, festzustellen, um die Strom-/ Spannungszufuhr zum Motor in einem solchen Fall zu unterbinden. Dann wird kein Ruhestrom benötigt, die Schalter werden nicht geschädigt und auch die Motoren werden nicht durch Blockstrom beeinträchtigt. Dabei kann die vorbestimmte Zeitspanne zweckmäßig länger als die maximale Dauer eines maximalen Verstellweges der jeweiligen Verstellfunktion gewählt werden. Auf diese Weise ist es sichergestellt, dass bei einer maximalen Verstellung nicht zu früh eine Deaktivierung des Motors stattfindet.

In diesem Kontext ist es ferner zweckmäßig, wenn bei aufgrund einer Überschreitung der vorbestimmten Zeitspanne geöffneten Relais durch die Steuereinheit zyklisch überprüft wird, ob der Schalter geöffnet und/oder die Bedienelementbetätigung beendet wurde, wonach bei einer erneuten Betätigung des Bedienelements ohne Vorliegen des Kollisionssignals das Relais wieder geschlossen wird. Auf diese Weise kann auch eine Beendigung des "Hängens" des Schalters/Bedienelements erkannt werden, so dass im Folgenden eine Betätigung wieder wie üblich möglich ist.

In einer bevorzugten Weiterbildung können die Verstellfunktionen eine Lehnenverkippungsfunktion und eine Längsverstellungsfunktion umfassen, wobei nur den diesen Verstellfunktionen zugeordneten Motoren ein Relais zugeordnet ist. Es hat sich gezeigt, dass die Verstellung des Sitzes in Längsrichtung des Kraftfahrzeugs (Längsverstellungsfunktion) und die Verkippung einer Lehne des Sitzes des Kraftfahrzeugs (Lehnenverkippungsfunktion) die kritischen Funktionen darstellen, die einen Insassen nach einer Kollision weiter beeinträchtigen können. Andere Verstellfunktionen, wie beispielsweise eine Höhenverstellung des Sitzes und/oder eine Verkippung der Sitzfläche des Sitzes sind üblicherweise unkritisch, so dass hier auf den Aufwand einer entsprechenden Crashsicherung verzichtet werden kann. Auf diese Weise wird Aufwand eingespart, indem nur für die Verstellfunktionen, für die dies notwendig ist, ein zusätzliches Relais zur Sicherung im Kollisionsfall zugeordnet wird. Selbstverständlich sind im Rahmen der Erfindung auch Ausgestaltungen denkbar, in denen eine oder drei als mehr bzw. allgemein andere Verstellfunktionen im Crashfall derart deaktivierbar sind.

Neben der Sitzverstellungseinrichtung betrifft die vorliegende Erfindung auch ein Kraftfahrzeug mit einem Sitz und einer diesem zugeordneten Sitzverstellungseinrichtung der erfindungsgemäßen Art. Sämtliche Ausführungen bezüglich der erfindungsgemäßen Sitzverstellungseinrichtung lassen sich analog auf das erfindungsgemäße Kraftfahrzeug übertragen, mit welchem mithin ebenso die bereits genannten Vorteile erhalten werden können.

Denkbar ist auch ein Verfahren zum Betrieb einer Sitzverstellungseinrichtung der erfindungsgemäßen Art, wobei mittels der Steuereinheit bei einer Bedienelementbetätigung ohne Vorliegen eines eine Kollision des Kraftfahrzeugs anzeigenden Kollisionssignals das Relais geschlossen wird und bei einer Bedienelementbetätigung bei Vorliegen des Kollisionssignals wenigstens zeitweise, bevorzugt bis zu einer zweiten Betätigung des Bedienelements nach Wegfall des Kollisionssignals, das Relais geöffnet belassen wird. Auch für das Verfahren gelten die bisherigen Ausführungen selbstverständlich fort.

Es sei noch angemerkt, dass eine nicht erfindungsgemäße Ausgestaltung auch vorsehen kann, bei Verwendung eines Steuergeräts, das Schaltsignale von nicht unmittelbar die Last schaltenden Schalter betätigenden Bedienelementen einliest und basierend auf diesem und dem Kollisionssignal die Verstellfunktion steuert, die Schalter als ein Doppelrelais ausgebildet werden können, wobei zusätzlich ein dem Bedienelement zugeordneter Zusatzschalter eingesetzt wird, welcher bei Vorliegen des Kollisionssignals geöffnet wird. Das bedeutet, bei einer Ausgestaltung mit einem Steuergerät und nicht unmittelbar mechanisch lastschaltenden Bedienelementen kann eine Motornutzung im Kollisionsfall auch dadurch unterbunden werden, dass Bedieneingaben der Bedienelemente nicht länger entgegengenommen werden. Dies weist jedoch den Nachteil auf, dass ein Doppelrelais erforderlich ist, eine Verzögerung bei der Motoransteuerung auftritt und eine Freistellmöglichkeit für hängende Relais und eine Reaktivierung für Rettungsperson nicht mehr simpel zu realisieren sind.

Weitere Vorteile und Einzelheiten der vorliegenden Erfindung ergeben sich aus den im Folgenden beschriebenen Ausführungsbeispielen sowie anhand der Zeichnungen. Dabei zeigen:
- Fig. 1: eine Prinzipskizze eines erfindungsgemäßen Kraftfahrzeugs, und
- Fig. 2: eine erfindungsgemäße Sitzverstellungseinrichtung.

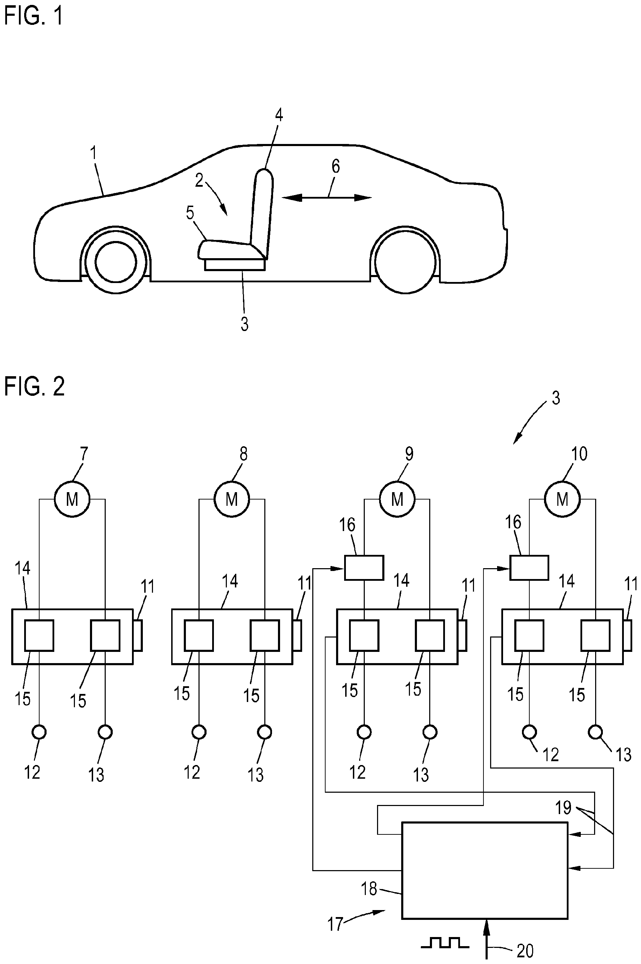

Fig. 1 zeigt eine Prinzipskizze eines erfindungsgemäßen Kraftfahrzeugs 1. Dieses weist wenigstens einen Sitz 2 auf, dem eine erfindungsgemäße Sitzverstellungseinrichtung 3 zugeordnet ist, welche im Folgenden im Hinblick auf Fig. 2 näher erläutert werden wird. Der Sitz 2 umfasst eine Lehne 4 und eine Sitzfläche 5, wobei als Verstellfunktion der Sitzverstellungseinrichtung vorliegend eine Verschiebung des Sitzes in Längsrichtung 5 des Kraftfahrzeugs 1, ein Abheben/Absenken der Sitzfläche 5, ein Verkippen der Sitzfläche 5 und ein Verschwenken der Lehne 4 vorgesehen sind.

Fig. 2 zeigt in Form einer abstrahierten Darstellung die Struktur der Sitzverstellungseinrichtung 3 genauer. Diese umfasst zunächst Motoren 7, 8, 9, 10 zur Realisierung der Verstellfunktionen. Der Motor 7 dient dabei der Verstellung der Verkippung der Sitzfläche, der Motor 8, der Verstellung der Höhe der Sitzfläche, der Motor 9 der Längsverstellung des Sitzes 2 und der Motor 10 der Verkippung der Lehne 4. Die Motoren 7 bis 10 werden dabei grundsätzlich bedienerseitig über Bedienelemente 11 angesteuert, die zwei Betätigungsstellungen aufweisen, um den jeweiligen Motor in beide Richtungen betätigen zu können. Um die Motoren 7 bis 10 bei einer Betätigung eines entsprechenden Bedienelements 11 mit der jeweiligen Stromversorgung, hier gegeben durch einen Klemme-30-Anschluss 12 und einen Klemme-31-Anschluss 13, zu verbinden, weist eine mit den Bedienelementen 11 jeweils mechanisch gekoppelte Schalteinrichtung 14 jeweils zwei Schalter 15 auf, die je nach Betätigungsrichtung des Bedienelements 11 die gezeigten Motorleitungen entsprechend mit einem der Anschlüsse 12, 13 verbinden.

Die durch das Bedienelement 11 und die Schalteinrichtung 14 gebildete mechanische Bedieneinrichtung ist dabei mithin unmittelbar lastschaltend.

Besonderheiten bestehen bei den im Kollisionsfall nicht durch Verformung des Kraftfahrzeugs 1 zu betätigenden Verstellfunktionen für die Längsverstellung des Sitzes 2 und die Lehnenverschwenkung der Lehne 4, Motoren 9 und 10. In einer der Leitungen zu den Motoren 9, 10 ist jeweils ein Relais 16 geschaltet, welches im Normalfall in offener Stellung befindlich ist, mithin bestromt werden muss, um eine Verbindung zwischen der Schalteinrichtung 14 und dem Motor 9 herstellen zu können. Die Relais 16 können über eine Steuereinheit 17, die hier als ein Mikrochip 18 ausgebildet ist, angesteuert werden, um den Stromfluss und somit den Betrieb der Motoren 9, 10 zu erlauben. Hierzu überwacht die Steuereinheit 17, ob die Bedienelemente 11 für die Motoren 9, 10 betätigt wurden, wofür beispielsweise in einer Schließschaltung nach den dann auch betätigten Schaltern eine abzweigende Signalleitung mit einem hohen Widerstand gelegt werden kann. Dabei ist zu beachten, dass eine Betätigung der Schalter 15 aufgrund der Nachschaltung des Relais 16 auch dann festgestellt werden kann, wenn das Relais 16 in einem offenen Zustand befindlich ist, mithin der Motor 9, 10 überhaupt nicht betrieben wird.

Die Betätigung des Bedienelements 11 und mithin der Schalter 15 anzeigende Schließsignale werden mithin über Steuerleitungen 19 der Steuereinheit 17 zugeführt. Diese empfängt ferner über einen weiteren Eingang ein pulsweitenmoduliertes Kollisionssignal gemäß dem Pfeil 20 im Fall einer Kollision des Kraftfahrzeugs 1. Liegt kein Kollisionssignal vor, schließt die Steuereinheit 17 durch Bestromung das entsprechende Relais 16 bei Betätigung des entsprechenden Bedienelements 11, so dass die entsprechende Verstellfunktion durch Betrieb des entsprechenden Motors 9, 10 ausgeführt wird.

Wenn jedoch ein Kollisionssignal vorliegt oder vorlag, wird für die nächste Betätigung des jeweiligen Bedienelements 11 das entsprechende Relais 16 gerade nicht bestromt, so dass dann, wenn beispielsweise durch Verformung bei der Kollision ein Bedienelement betätigt wird, es nicht zur Durchführung der Verstellfunktion kommt und ein Insasse auf dem Sitz 2 geschützt wird.

Allerdings ist die Steuereinheit 17 auch ausgebildet, bei der zweiten Betätigung eines Bedienelements 11 nach dem Ende des Vorliegens eines eine Kollision anzeigenden Kollisionssignals die Funktion wieder normal zu betreiben, mithin das entsprechende Relais 16 zu bestromen und somit die Verstellfunktion zu ermöglichen. Das bedeutet, die Verstellfunktionen über die Motoren 9, 10 werden genau für einen Verstellvorgang blockiert, damit Rettungskräfte nach der Kollision (oder auch der Insasse selber nach der Kollision) wieder die Möglichkeit hat, die Verstellfunktion einzusetzen, beispielsweise, um sich aus dem Kraftfahrzeug 1 zu befreien, die Zugänglichkeit zu erleichtern und/oder, falls die Kollision nicht zu schwer war, einfach gewollt die Verstellfunktionen wieder einsetzen zu können.

Die Steuereinheit 17 weist schließlich eine weitere Funktion auf, nämlich die Detektion hängender bzw. verklemmter Schalter 15 bzw. Bedienelemente 11. Wird festgestellt, dass eine vorbestimmte Zeitspanne überschreitend die Schalter 15 geschlossen bleiben, wird auf einen ungewollten Defekt geschlossen und die Bestromung des jeweiligen Relais 16 wird abgebrochen, um den Motor 9 und die Schalter 15 zu schonen. Dennoch wird mittels der Steuerleitungen 19 und der entsprechenden Schaltsignale weiter überwacht, ob die Betätigung anhält. Sobald die Betätigung endet, wird davon ausgegangen, dass der hängende/klemmende Zustand behoben wurde und der Betrieb wird wieder normal unter Wiederherstellung der Verfügbarkeit der Verstellfunktion fortgesetzt. Die vorbestimmte Zeitspanne ist hier im Übrigen so gewählt, dass sie eine maximale Verstellstrecke der jeweiligen Verstellfunktion übersteigt.

Es sei noch darauf hingewiesen, dass das Kollisionssignal als PWM-Signal beispielsweise über eine spezielle Leitung unmittelbar von einem Airbag-Steuergerät und/oder einem Steuergerät eines Sicherheitssystems geliefert werden kann.

## Patentansprüche

1. Sitzverstellungseinrichtung (3) für einen Sitz (2) eines Kraftfahrzeugs (1), aufweisend wenigstens einen die Verstellung treibenden Motor (9, 10) und wenigstens ein durch einen Bediener betätigbares Bedienelement (11) für wenigstens eine Verstellfunktion, bei dessen Betätigung ein in einer Leitung von dem der Verstellfunktion zugeordneten Motor (9, 10) zu einer Stromversorgung vorgesehener Schalter (15) geschlossen wird,
**dadurch gekennzeichnet,**
**dass** dem Schalter (15) zu dem Motor (9, 10) hin in der Leitung nachgeschaltet ein Relais (16) vorgesehen ist, welches im unbestromten Zustand geöffnet ist, und die Sitzverstellungseinrichtung (3) eine Steuereinheit (17) aufweist, die bei einer Bedienelementbetätigung ohne Vorliegen eines eine Kollision des Kraftfahrzeugs (1) anzeigenden Kollisionssignals zum Schließen des Relais (16) ausgebildet ist und bei einer Bedienelementbetätigung bei Vorliegen des Kollisionssignals wenigstens zeitweise das Relais (16) geöffnet belässt.

2. Sitzverstellungseinrichtung (3) nach Anspruch 1,
**dadurch gekennzeichnet,**
**dass** das Bedienelement (11) mechanisch mit den lastschaltenden Schaltern (15) gekoppelt ist und ein Schließen der Schalter (15) mittels einer Schließschaltung ein Schließsignal an die Steuereinheit (17) bewirkt oder mittels der Schließschaltung durch die Steuereinheit (17) detektierbar ist.

3. Sitzverstellungseinrichtung (3) nach Anspruch 1 oder 2,
**dadurch gekennzeichnet,**
**dass** die Steuereinheit (17) ein Mikrochip (18) ist und/oder das Kollisionssignal als ein PWM-Signal erhalten wird.

4. Sitzverstellungseinrichtung (3) nach einem der vorangehenden Ansprüche,
**dadurch gekennzeichnet,**
**dass** die Steuereinheit (17) zum Schließen des Relais (16) bei einer Schalterbetätigung ab einer zweiten Schalterbetätigung nach dem Vorliegen des Kollisionssignals ausgebildet ist.

5. Sitzverstellungseinrichtung (3) nach einem der vorangehenden Ansprüche,
**dadurch gekennzeichnet,**
**dass** die Steuereinheit (17) zum Öffnen des Relais (16) bei einem länger als eine vorbestimmte Zeitspanne betätigtem Bedienelement (11) und/oder geschlossenen Schalter (15) ausgebildet ist.

6. Sitzverstellungseinrichtung (3) nach Anspruch 5,
**dadurch gekennzeichnet,**
**dass** die vorbestimmte Zeitspanne länger als die maximale Dauer eines maximalen Verstellweges der jeweiligen Verstellfunktion gewählt ist.

7. Sitzverstellungseinrichtung (3) nach Anspruch 5 oder 6,
**dadurch gekennzeichnet,**
**dass** bei aufgrund Überschreitung der vorbestimmten Zeitspanne geöffneten Relais (16) durch die Steuereinheit (17) zyklisch überprüft wird, ob der Schalter (15) geöffnet und/oder die Bedienelementbetätigung beendet wurde, wonach bei einer erneuten Betätigung des Bedienelements (11) ohne Vorliegen des Kollisionssignals das Relais (16) wieder geschlossen wird.

8. Sitzverstellungseinrichtung (3) nach einem der vorangehenden Ansprüche,
**dadurch gekennzeichnet,**
**dass** die Verstellfunktionen eine Lehnenverkippungsfunktion und eine Längsverstellungsfunktion umfassen, wobei nur den diesen Verstellfunktionen zugeordneten Motoren (9, 10) ein Relais (16) zugeordnet ist.

9. Kraftfahrzeug (1) mit einem Sitz (2) und einer diesem zugeordneten Sitzverstellungseinrichtung (3) nach einem der vorangehenden Ansprüche.

## Claims

1. Seat adjustment system (3) for a seat (2) of a motor vehicle (1), comprising at least one motor (9, 10) which drives the adjustment and at least one operating element (11), which can be actuated by an operator for at least one adjustment function, and the actuation of which closes a switch (15) provided in a line from the motor (9,10) associated with the adjustment function to a power supply,
**characterised in**
**that** a relay (16) is provided downstream of the switch (15) to the motor (9, 10) in the line and is open in the currentless state, and the seat adjustment system (3) has a control unit (17) which is designed to close the relay (16) when an operating element is actuated and there is no collision signal indicating a collision of the motor vehicle (1) and leaves the relay (16) open at least temporarily if a collision signal is present when an operating element is actuated.

2. Seat adjustment system (3) according to claim 1,
**characterised in**
**that** the operating element (11) is mechanically coupled to the load-switching switches (15), and a closing of the switches (15) by means of a closing circuit causes a closing signal to the control unit (17) or can be detected by the control unit (17) by means of the closing circuit.

3. Seat adjustment system (3) according to claim 1 or 2,
**characterised in**
**that** the control unit (17) is a microchip (18) and/or the collision signal is received as a PWM signal.

4. Seat adjustment system (3) according to any of the preceding claims,
**characterised in**
**that** the control unit (17) is designed to close the relay (16) when a switch is actuated following a second switch actuation after a collision signal is present.

5. Seat adjustment system (3) according to any of the preceding claims,
**characterised in**
**that** the control unit (17) is designed to open the relay (16) when an operating element (11) is actuated and/or switches (15) are closed for longer than a predetermined period of time.

6. Seat adjustment system (3) according to claim 5,
**characterised in**
**that** the predetermined period of time is selected to be longer than the maximum duration of a maximum adjustment path of the specific adjustment function.

7. Seat adjustment system (3) according to claim 5 or 6,
**characterised in**
**that** when relays (16) are open because the predetermined period of time has been exceeded, the control unit (17) cyclically checks whether the switch (15) has been opened and/or actuation of the operating element has ended, after which the relay (16) is closed again when the operating element (11) is actuated again and no collision signal is present.

8. Seat adjustment system (3) according to any of the preceding claims,
**characterised in**
**that** the adjustment functions comprise a backrest tilting function and a longitudinal adjustment function, wherein a relay (16) is associated only with the motors (9, 10) associated with these adjustment functions.

9. Motor vehicle (1) with a seat (2) and a seat adjustment system (3) associated therewith according to any of the preceding claims.

## Revendications

1. Appareil de réglage de siège (3) pour un siège (2) d'un véhicule automobile (1), présentant au moins un moteur entraînant le réglage (9, 10) et au moins un élément de commande (11) actionnable par un utilisateur pour au moins une fonction de réglage, lors de l'actionnement duquel un commutateur (15) prévu dans une ligne par le moteur (9, 10) associé à la fonction de réglage pour une alimentation électrique est fermé,
**caractérisé en ce que**
un relais (16) est prévu dans la ligne en aval du commutateur (15) vers le moteur (9, 10), lequel relais est ouvert dans l'état non alimenté, lequel relais est ouvert dans l'état non alimenté, et l'appareil de réglage de siège (3) présente une unité de commande (17) qui est réalisée lors d'un actionnement d'élément de commande en l'absence d'un signal de collision indiquant une collision du véhicule automobile (1) pour la fermeture du relais (16) et lors d'un actionnement d'élément de commande dans le cas de la présence du signal de collusion laisse le relais (16) ouvert au moins temporairement.

2. Appareil de réglage de siège (3) selon la revendication 1,
**caractérisé en ce que**
l'élément de commande (11) est couplé mécaniquement aux commutateurs commutant la charge (15) et une fermeture des commutateurs (15) au moyen d'une commutation en fermeture entraîne un signal de fermeture au niveau de l'unité de commande (17) ou est détectable au moyen de la commutation en fermeture par le biais de l'unité de commande (17).

3. Appareil de réglage de siège (3) selon la revendication 1 ou 2,
**caractérisé en ce que**
l'unité de commande (17) est une micropuce (18) et/ou le signal de collision est reçu en tant que signal MLI.

4. Appareil de réglage de siège (3) selon l'une quelconque des revendications précédentes,
**caractérisé en ce que**
l'unité de commande (17) est réalisée pour la fermeture du relais (16) lors d'un actionnement de commutateur à compter d'un second actionnement de commutateur selon la présence du signal de collision.

5. Appareil de réglage de siège (3) selon l'une quelconque des revendications précédentes,
**caractérisé en ce que**
l'unité de commande (17) est réalisée pour l'ouverture du relais (16) lorsqu'un élément de commande (11) et/ou un commutateur fermé (15) sont actionnés plus longtemps qu'un intervalle de temps prédéterminé.

6. Appareil de réglage de siège (3) selon la revendication 5,
**caractérisé en ce que**
l'intervalle de temps prédéterminé est choisi plus long que la durée maximale d'une course de réglage maximale de la fonction de réglage respective.

7. Appareil de réglage de siège (3) selon la revendication 5 ou 6,
**caractérisé en ce que**
lorsque le relais (16) est ouvert en raison du dépassement de l'intervalle de temps prédéterminé il est vérifié de manière cyclique par le biais de l'unité de commande (17) si le commutateur (15) est ouvert et/ou l'actionnement d'élément de commande est terminé, après quoi lors d'un actionnement renouvelé de l'élément de commande (11) en l'absence du signal de collision le relais (16) est refermé.

8. Appareil de réglage de siège (3) selon l'une quelconque des revendications précédentes,
**caractérisé en ce que**
les fonctions de réglage comprennent une fonction de basculement d'appui et une fonction de réglage longitudinal, dans lequel un relais (16) n'est associé qu'aux moteurs (9, 10) associés à ces fonctions de réglage.

9. Véhicule automobile (1) avec un siège (2) et un appareil de réglage de siège (3) associé à celui-ci selon l'une quelconque des revendications précédentes.
